# EUROPEAN PATENT APPLICATION

(11) **EP 4 768 699 A1**
(43) Date of publication of application: **01.07.2026**
(21) Application number: 25220794.9
(22) Date of filing: 04.12.2025
(51) Int. Cl.: F01M 1/02, F01L 1/344, F01M 1/16, F01M 1/20, F01M 9/10

(54) **OIL SUPPLY APPARATUS FOR ENGINE, ENGINE AND METHOD OF SUPPLYING OIL**

(30) Priority: 24.12.2024 JP 2024227827
(71) Applicant: MAZDA MOTOR CORPORATION, Hiroshima 730-8670 (JP)
(72) Inventor: SUESADA, Kazuma, Aki-gun, Hiroshima 730-8670 (JP); AIZAWA, Kazuaki, Aki-gun, Hiroshima 730-8670 (JP); TANIGUCHI, Yuichi, Aki-gun, Hiroshima 730-8670 (JP); HONDA, Kenta, Aki-gun, Hiroshima 730-8670 (JP); NOZAWA, Satoshi, Aki-gun, Hiroshima 730-8670 (JP); TAKAGI, Shu, Aki-gun, Hiroshima 730-8670 (JP); KISHIKAWA, Naoki, Aki-gun, Hiroshima 730-8670 (JP)
(74) Representative: Müller-Boré & Partner Patentanwälte PartG mbB

(57) **Abstract**

An oil supply apparatus includes a variable capacity oil pump 81, a hydraulic pressure detection section 50a detecting a hydraulic pressure in an oil supply passage 5, an oil control valve 84 changing an oil discharge amount, a mechanical relief valve 81z partially discharging oil to outside of the oil supply passage when a discharge hydraulic pressure of the oil pump exceeds an upper limit pressure, a temperature detection section 50b detecting a temperature of an engine, and a control section 60. When the temperature is equal to or higher than a set temperature, the oil control valve is subject to feedback control such that the hydraulic pressure matches a target hydraulic pressure. When the temperature is lower than the set temperature, the feedback control is prohibited, and the oil control valve is controlled such that an oil discharge amount becomes a maximum amount.

## Description

### [Technical Field]

The present invention relates to an oil supply apparatus for an engine. The present invention also relates to an engine and a method of supplying oil.

### [Background Art]

Conventionally, an apparatus that is provided to an engine and includes an oil pump, an oil supply passage connecting the oil pump and each section of the engine, and an oil control valve changing a discharge amount of the oil pump has been known. In addition, as a control configuration of the oil control valve, it has been known to execute feedback control on the oil control valve such that a hydraulic pressure in the oil supply passage becomes a target hydraulic pressure.

However, in the case where the oil control valve is subjected to the feedback control on the basis of the hydraulic pressure in the oil supply passage, hunting of the hydraulic pressure is possibly increased due to poor responsiveness of the oil when a temperature of the oil is low and viscosity thereof is high such as at a cold start of the engine.

To handle such a problem, in Patent Literature 1, the feedback control is stopped at the cold start of the engine, and a drive duty ratio of the oil control valve, which is formed by a linear solenoid valve, has a fixed value that is set on the basis of the temperature of the oil. Thus, this apparatus can stabilize the hydraulic pressure at the cold start of the engine.

### [Citation List]

### [Patent Literature]

[Patent Literature 1] JP2017-129068A

### [Summary]

### [Technical Problem]

As described above, when the temperature of the oil is low, the viscosity thereof is high. However, this relationship between the temperature and the viscosity varies depending on a type of the oil. That is, even at the same temperature, the viscosity of the oil varies depending on the type of the oil. Meanwhile, in the apparatus described in Patent Literature 1, the drive duty ratio of the oil control valve is set only on the basis of the temperature of the oil. Accordingly, depending on the type of the oil, the drive duty ratio of the oil control valve is not sufficiently suited for the viscosity of the oil, which possibly prevents the hydraulic pressure from being sufficiently increased or causes the excessive increase of the hydraulic pressure.

The invention has been made in view of the circumstance as described above and therefore has an object of providing an oil supply apparatus for an engine capable of controlling a hydraulic pressure to an appropriate pressure while stabilizing this.

The above problem is solved by the invention as defined in independent claims. For example, an oil supply apparatus is provided to an engine and supplies oil to a hydraulic actuation device, and includes: a variable capacity oil pump; an oil supply passage that connects the oil pump and the actuation device to supply the oil to the actuation device; a hydraulic pressure detection section that detects a hydraulic pressure in the oil supply passage; a temperature detection section that detects a temperature of the engine; an oil control valve that changes an oil discharge amount as an amount of the oil discharged from the oil pump by adjusting a flow rate of the oil supplied to a pressure chamber of the oil pump; and a control section that controls the oil control valve. The oil supply apparatus may further include a mechanical relief valve that discharges or partially discharges the oil to outside of the oil supply passage when a discharge hydraulic pressure as a pressure of the oil discharged from the oil pump exceeds an upper limit pressure. The control section sets a target hydraulic pressure as a target value of the hydraulic pressure in the oil supply passage according to an operation state of the engine and executes feedback control of the oil control valve such that the hydraulic pressure detected by the hydraulic pressure detection section matches the target hydraulic pressure, when the temperature detected by the temperature detection section is equal to or higher than a predetermined set temperature. The control section prohibits the feedback control and controls the oil control valve such that the oil discharge amount becomes a maximum amount when the temperature detected by the temperature detection section is lower than the set temperature.

In the invention, when it is considered that a temperature of the engine is equal to or higher than the set temperature and thus the temperature of the oil is high, that is, when viscosity of the oil is low and thus responsiveness of the oil is favorable accordingly, the oil control valve is subject to feedback control such that the hydraulic pressure in the oil supply passage becomes the target hydraulic pressure. Accordingly, it is possible to obtain the target hydraulic pressure while stabilizing the hydraulic pressure.

In addition, in the invention, when the temperature of the engine is lower than the set temperature and it is considered that the temperature of the oil is low, that is, when the viscosity of the oil is high and thus the responsiveness of the oil is low accordingly, the feedback control is stopped. Thus, it is possible to avoid the hydraulic pressure from becoming unstable due to the feedback control. At this time, the oil control valve is controlled to maximize the oil discharge amount. Thus, it is possible to promptly increase the hydraulic pressure in the oil supply passage regardless of a type of the oil. Moreover, the mechanical relief valve is provided. Thus, when the discharge hydraulic pressure exceeds the upper limit pressure, the oil discharged from the oil pump is partially discharged to the outside of the oil supply passage. Therefore, it is possible to prevent the discharge hydraulic pressure and the hydraulic pressure in the oil supply passage from becoming excessively high.

In the above configuration, preferably, the upper limit pressure may be set to a lower pressure than a minimum value of the discharge hydraulic pressure at the time when abnormal noise is generated from the oil pump. In other words, the upper limit pressure may be lower than a minimum value of the discharge hydraulic pressure when abnormal noise is generated from the oil pump.

According to this configuration, it is possible to prevent the abnormal noise from being generated from the oil pump while achieving the above effects.

In the configuration, preferably, the actuation device may include a hydraulic exhaust closing timing change device that changes valve closing timing of an exhaust valve provided to the engine. When the temperature detected by the temperature detection section is lower than the set temperature, the control section controls the exhaust closing timing change device to delay or retard the valve closing timing of the exhaust valve, preferably, from that at the time when the temperature is equal to or higher than the set temperature. In other words, the valve closing timing of the exhaust valve may be delayed or retarded from a valve closing timing of the exhaust valve when the temperature is equal to or higher than the set temperature.

According to this configuration, when the temperature of the engine is lower than the set temperature, the valve closing timing of the exhaust valve is set to timing on a retard side. Thus, exhaust performance of the engine at a cold start of the engine, and the like can be improved. For example, when the valve closing timing of the exhaust valve is delayed, an amount of high-temperature burned gas that remains in a cylinder of the engine can be increased by extending an overlap period in which valve opening periods of an intake valve and the exhaust valve overlap. Accordingly, a temperature inside the cylinder can be increased also at the cold start and the like. Thus, it is possible to suppress discharge of the unburned fuel and the like by promoting combustion of air-fuel mixture of fuel and air in the cylinder. However, when the exhaust closing timing change device is not appropriately operated, the valve closing timing of the exhaust valve cannot be delayed sufficiently, and the above effect cannot be obtained. To handle the above, in an embodiment, as described above, also when the temperature of the engine is lower than the set temperature, the hydraulic pressure in the oil supply passage and thus the hydraulic pressure supplied to the exhaust closing timing change device can stably be increased to appropriate pressures. Thus, the exhaust performance of the engine can be improved by reliably setting the exhaust valve closing timing change device to the timing on the retard side.

### [Advantageous Effects]

As it has been described so far, the oil supply apparatus for an engine according to the invention can control the hydraulic pressure appropriately while stabilizing the pressure.

### [Brief Description of Drawings]

[FIG. 1] FIG. 1 is a schematic cross-sectional view of an engine to which an oil supply apparatus according to an embodiment of the invention is applied.
[FIG. 2] FIG. 2 is a cross-sectional view illustrating a schematic configuration of an exhaust S-VT.
[FIG. 3] FIG. 3 is a hydraulic circuit diagram of the oil supply apparatus.
[FIG. 4] FIG. 4 is a flowchart illustrating contents of control that is executed by a controller.
[FIG. 5] FIG. 5 is a graph illustrating valve lift of an intake/exhaust valve.

### [Description of Embodiments]

Hereinafter, exemplary embodiments will be described in detail with reference to the drawings.

### (Configuration of Engine)

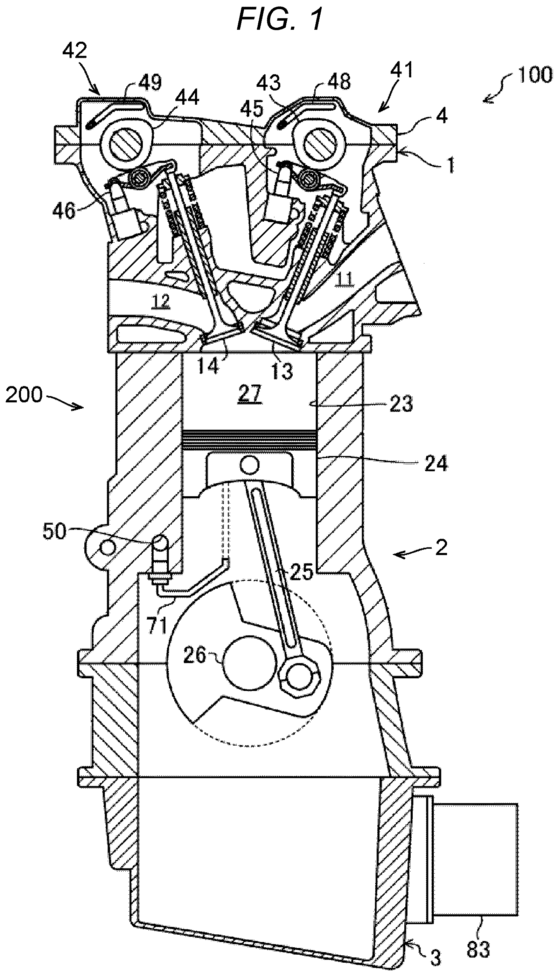

FIG. 1 is a schematic cross-sectional view of an engine 100 to which an oil supply apparatus 200 according to an embodiment of the invention is applied. FIG. 1 is a schematic cross-sectional view of the engine 100 that is taken along a plane including an axis of a cylinder 23, which will be described later, in the engine 100.

In the present embodiment, the engine 100 is e.g., an inline four-cylinder engine in which the four cylinders 23 are aligned in a predetermined cylinder row direction (only one cylinder 23 is illustrated in FIG. 1). The engine 100 may include: a cylinder block 2 that is formed with one or more cylinders, e.g., the four cylinders 23; a cylinder head 1 attached to an upper surface of the cylinder block 2; a head cover 4 attached to an upper surface of the cylinder head 1; and an oil pan 3 attached to a lower surface of the cylinder block 2.

For example, a piston 24 that reciprocates in an up-down direction on the inside of the cylinder 23 is fitted to each of the cylinders 23. A combustion chamber 27 is defined at a position above each of the pistons 24. Each of the pistons 24 is coupled to a crankshaft 26 via a connecting rod 25.

The cylinder head 1 may be formed with an intake port 11 and/or an exhaust port 12 that are opened to the combustion chamber 27. For example, the cylinder head 1 is provided with: an intake valve 13 that opens and/or closes the opening on the combustion chamber 27 side of the intake port 11; and an exhaust valve 14 that opens and/or closes the opening on the combustion chamber 27 side of the exhaust port 12. One or more intake ports 11, one or more exhaust ports 12, one or more intake valves 13, and one or more exhaust valves 14 are provided in each of the combustion chambers 27. In the present embodiment, the two intake ports 11, the two exhaust ports 12, the two intake valves 13, and the two exhaust valves 14 are provided in each of the combustion chambers 27.

The cylinder head 1 may be provided with an intake valve mechanism 41 that drives to open and/or close the intake valve 13; and an exhaust valve mechanism 42 that drives to open and/or close the exhaust valve 14. The intake valve mechanism 41 and the exhaust valve mechanism 42 drive to open and/or close the intake valve 13 and the exhaust valve 14 in conjunction with rotation of the crankshaft 26.

For example, the intake valve mechanism 41 includes an intake camshaft 43 that extends in a cylinder arrangement direction. The intake camshaft 43 rotates in conjunction with the crankshaft 26. The intake camshaft 43 presses the intake valve 13 at a predetermined rotational position and opens this against an urging force of a spring.

The exhaust valve mechanism 42 may include an exhaust camshaft 44 that extends in the cylinder arrangement direction. The exhaust camshaft 44 rotates in conjunction with the crankshaft 26. The exhaust camshaft 44 presses the exhaust valve 14 at a predetermined rotational position and opens this against the urging force of a spring.

The intake valve mechanism 41 and/or the exhaust valve mechanism 42 may respectively be provided with hydraulic lash adjusters (HLAs) 45, 46 that respectively adjust valve clearances of the intake valve 13 and the exhaust valve 14 to zero. These HLAs 45, 46 are actuated when supplied with the oil.

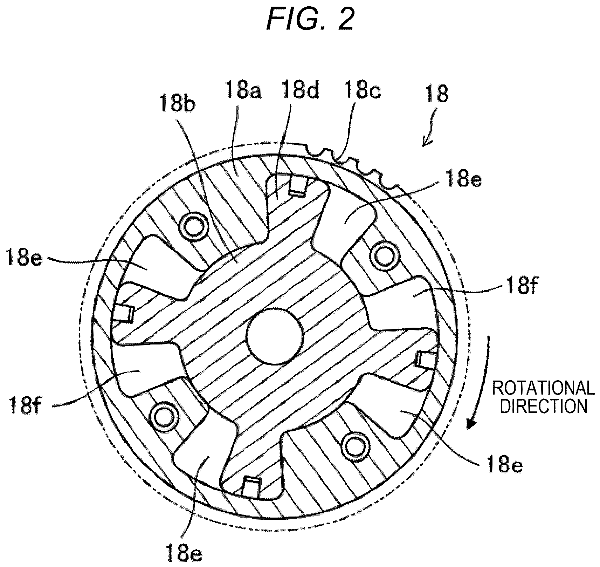

In the exhaust valve mechanism 42, an exhaust-side variable valve timing mechanism 18 (see FIG. 2) capable of changing opening and/or closing timing (valve opening timing and/or valve closing timing) of the exhaust valve 14 may be installed. Hereinafter, the exhaust-side variable valve timing mechanism 18 will be referred to as an exhaust S-VT 18.

For example, the exhaust S-VT 18 changes the opening and/or closing timing of the exhaust valve 14 while maintaining valve lift and a valve opening period of the exhaust valve 14 constant, and the valve opening timing and the valve closing timing of the exhaust valve 14 are advanced or retarded by the same amount. The exhaust S-VT 18 may be of a hydraulic type and be actuated when supplied with the oil. The exhaust S-VT 18 may correspond to the "exhaust closing timing change device".

Similar to the exhaust valve mechanism 42, an intake-side variable valve timing mechanism (not illustrated) capable of changing opening and/or closing timing of the intake valve 13 while maintaining valve lift and a valve opening period of the intake valve 13 may be installed in the intake valve mechanism 41. For example, in the present embodiment, the intake-side variable valve timing mechanism is of an electric type.

An oil jet 71 that injects the oil onto each of the pistons 24 from below may be provided in the cylinder block 2. An intake-side oil shower 48 that drips the oil onto the intake camshaft 43 and/or a periphery thereof and an exhaust-side oil shower 49 that drips the oil onto the exhaust camshaft 44 and/or a periphery thereof may also be provided in the head cover 4.

### (Exhaust S-VT)

FIG. 2 is a cross-sectional view illustrating a schematic configuration of the exhaust S-VT 18. As illustrated in FIG. 2, for example, the exhaust S-VT 18 includes a substantially annular housing 18a and a rotor 18b accommodated in the housing 18a.

The housing 18a is coupled to a cam pulley 18c, which rotates in synchronization with the crankshaft 26, in a manner to be integrally rotatable therewith. The rotor 18b is coupled to the exhaust camshaft 44 in a manner to be integrally rotatable therewith.

The rotor 18b may be provided with a vane 18d that slides on an inner peripheral surface of the housing 18a. Plural retard hydraulic chambers 18e and advance hydraulic chambers 18f, each of which is defined by the inner peripheral surface of the housing 18a, the vane 18d, and a body of the rotor 18b, are formed in the housing 18a. The oil is supplied to these retard hydraulic chambers 18e and/or advance hydraulic chambers 18f.

When hydraulic pressures in the retard hydraulic chambers 18e are high, the rotor 18b rotates in a direction opposite to a rotational direction of the housing 18a. That is, the camshaft 44 rotates in a direction opposite to the cam pulley 18c, and the opening and/or closing timing of the exhaust valve 14 is retarded (becomes later).

On the other hand, when the hydraulic pressures in the advance hydraulic chambers 18f are high, the rotor 18b rotates in the same direction as the rotational direction of the housing 18a. That is, the camshaft 44 rotates in the same direction as the cam pulley 18c, and the opening and/or closing timing of the exhaust valve 14 is advanced (becomes earlier).

Here, a change speed of the opening and/or closing timing of the exhaust valve 14 depends on a rotational speed of the rotor 18b, and the rotational speed of the rotor 18b depends on the hydraulic pressures of the retard hydraulic chambers 18e and the advance hydraulic chambers 18f, that is, the hydraulic pressure supplied to the exhaust S-VT 18. For example, in the case where the opening and/or closing timing of the exhaust valve 14 is changed to be retarded, and the hydraulic pressures in the retard hydraulic chambers 18e are low or become lower, a retard speed of the exhaust valve 14 becomes slow.

### (Oil Supply Apparatus)

Next, a detailed description will be made on the oil supply apparatus 200. The oil supply apparatus 200 supplies the oil for actuation and/or lubrication to each section (or one or more sections) of the engine 100.

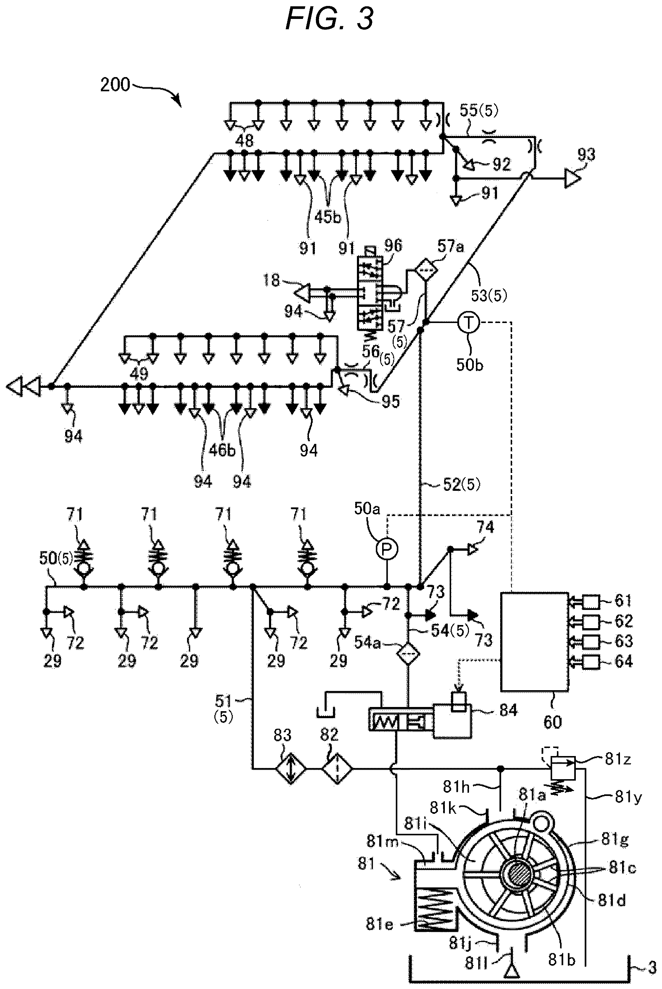

FIG. 3 is a hydraulic circuit diagram of the oil supply apparatus 200. The oil supply apparatus 200 includes: an oil pump 81 that pumps the oil; and an oil supply passage 5 that connects the oil pump 81 and each section (or the one or more sections) of the engine 100 to feed the oil supplied from the oil pump 81 to each section (or the one or more sections) of the engine.

The oil supply passage 5 defines a flow path of the oil, and a part thereof may be formed inside the cylinder head 1 and the cylinder block 2. For example, the oil supply passage 5 includes a main gallery 50, one or more, e.g., first to third communication passages 51 to 53, and one or more, e.g., first to third branch oil passages 55 to 57.

The main gallery 50 may be formed in the cylinder block 2. The first communication passage 51 is connected to the oil pump 81 and connects the oil pump 81 and the main gallery 50. The second communication passage 52 extends from the main gallery 50 to the cylinder head 1. The third communication passage 53 is connected to the second communication passage 52.

Each of the first to third branch oil passages 55 to 57 may be branched from the third communication passage 53. The oil that is introduced into the main gallery 50 is partially introduced into each of the branch oil passages 55 to 57 via the second communication passage 52 and the third communication passage 53.

For example, the oil jet 71, a bearing metal 29 that supports the crankshaft 26, a bearing metal 72 arranged on a crankpin of the crankshaft 26, an oil supply section 73 that supplies the oil to a hydraulic chain tensioner, and an oil jet 74 that injects the oil onto a timing chain are connected to the main gallery 50. The oil is supplied from the main gallery 50 to each of these sections.

The main gallery 50 may be provided with a hydraulic pressure sensor 50a that detects the hydraulic pressure as a pressure of the oil flowing therethrough. In addition, the third communication passage 53 may be provided with an oil temperature sensor 50b that detects an oil temperature as a temperature of the oil flowing therethrough.

For example, the third communication passage 53 is formed in the cylinder head 1. Accordingly, the temperature of the oil that flows through the third communication passage 53 corresponds to the temperature of the cylinder head 1, that is, the temperature of the engine 100.

In the present embodiment, the temperature of the oil flowing through this third communication passage 53 is used as a control index of an oil control valve 84, which will be described below. That is, in the present embodiment, the oil temperature sensor 50b corresponds to the "temperature detection section" in the invention, and the temperature of the oil detected by the oil temperature sensor 50b corresponds to the "temperature of the engine" in the invention. The hydraulic pressure sensor 50a corresponds to the "hydraulic pressure detection section" in the invention.

For example, one or more oil supply sections 91, 92 that respectively supply the oil to a bearing metal and a bearing of the intake camshaft 43 are connected to the first branch oil passage 55, and an oil supply section 93 that supplies the oil to the HLA 45 on the intake side, the oil shower 48 on the intake side, and lubricated portions of an intake S-VT is connected thereto. The oil is supplied from the first branch oil passage 55 to each of these sections.

For example, one or more oil supply sections 94, 95 that respectively supply the oil to a bearing metal and a bearing of the exhaust camshaft 44 are connected to the second branch oil passage 56, and the HLA 46 on the exhaust side and the oil shower 49 on the exhaust side are connected thereto. The oil is supplied from the second branch oil passage 56 to each of these sections.

The retard hydraulic chambers 18e and the advance hydraulic chambers 18f of the exhaust S-VT 18 may be connected to the third branch oil passage 57 via e.g., a direction switching valve 96. The oil is supplied from the third branch oil passage 57 to each of the hydraulic chambers 18e, 18f of the exhaust S-VT 18 via the direction switching valve 96.

The direction switching valve 96 is a device that adjusts a flow rate of the oil supplied to the retard hydraulic chamber 18e and/or the advance hydraulic chamber 18f, and the direction switching valve 96 changes the rotational direction of the rotor 18b of the exhaust S-VT 18 and the camshaft 44, and thus a moving direction (the advance side or the retard side) of the opening and/or closing timing of the exhaust valve 14.

In the present embodiment, an oil filter 57a may be provided on an upstream side (the third communication passage 53 side) of the direction switching valve 96 in the third branch oil passage 57. One of the oil supply sections 94 that supply the oil to the exhaust camshaft 44 is connected to the third branch oil passage 57, and the oil is introduced into the oil supply section 94 from the third branch oil passage 57.

The oil that is supplied from the main gallery 50 and the first to third branch oil passages 55 to 57 to the respective sections may be returned to the oil pan 3 through drain oil passages (not illustrated).

For example, the oil pump 81 is arranged in the oil pan 3 and pumps the oil stored in the oil pan 3. The oil pump 81 is a variable capacity pump. The oil pump 81 is coupled to the crankshaft 26 and is rotationally driven thereby.

The oil pump 81 may include a drive shaft 81a that is rotationally driven by the crankshaft 26, a rotor 81b that is connected to the drive shaft 81a, and plural vanes 81c that are provided to be movable forward and backward in a radial direction from the rotor 81b. The oil pump 81 may also include a cam ring 81d that accommodates the rotor 81b and the vanes 81c therein, and the cam ring 81d is arranged such that an amount of eccentricity with respect to a rotation center of the rotor 81b can be changed.

For example, the oil pump 81 includes: a spring 81e that urges the cam ring 81d; and a ring member 81f arranged inside the rotor 81b. The oil pump 81 includes a housing 81g that accommodates the rotor 81b, the vanes 81c, the cam ring 81d, the spring 81e, and the ring member 81f.

Each of the vanes 81c slides on an inner circumferential surface of the cam ring 81d when the rotor 81b rotates. Inside the cam ring 81d, plural pump chambers (hydraulic oil chambers) 81i are each partitioned by the rotor 81b, the two adjacent vanes 81c, the cam ring 81d, and the housing 81g.

In the housing 81g, a suction port 81j for suctioning the oil into the pump chamber 81i is formed, and a discharge port 81k for discharging the oil from the pump chamber 81i is formed. An oil strainer 81l is connected to the suction port 81j.

The oil strainer 81l is immersed in the oil that is stored in the oil pan 3. The oil that is stored in the oil pan 3 is suctioned into the pump chamber 81i from the suction port 81j via the oil strainer 81l, is pressurized with the rotation of the rotor 81b and the vanes 81c, and is discharged from the discharge port 81k.

A pressure chamber 81m to which the oil is supplied may be partitioned between the cam ring 81d and the housing 81g. An oil discharge amount, which is an amount of the oil discharged from the discharge port 81k, that is, the oil pump 81, is increased as the amount of eccentricity of the cam ring 81d with respect to the rotation center of the rotor 81b is increased, and the amount of eccentricity and the oil discharge amount are reduced as the hydraulic pressure in the pressure chamber 81m is increased.

For example, the cam ring 81d is supported by the housing 81g in a manner to swing around a predetermined fulcrum and change the amount of eccentricity with respect to the rotation center of the rotor 81b. The spring 81e urges the cam ring 81d to one side around the fulcrum, that is, in a direction in which the amount of eccentricity of the cam ring 81d is increased. When the hydraulic pressure in the pressure chamber 81m is increased, the spring 81e is elastically deformed in response thereto, and the amount of eccentricity of the cam ring 81d with respect to the rotation center of the rotor 81b is reduced. Accordingly, the oil discharge amount is reduced.

The pressure chamber 81m may be connected to the main gallery 50 via a control oil supply passage 54. That is, the oil supply passage 5 has the control oil supply passage 54 that is branched from the main gallery 50 and connected to the pressure chamber 81m. The oil in the main gallery 50 is supplied to the pressure chamber 81m through the control oil supply passage 54.

The control oil supply passage 54 may be provided with the oil control valve 84 for adjusting the flow rate of the oil that flows into the pressure chamber 81m, that is, the hydraulic pressure of the pressure chamber 81m and thus the oil discharge amount of the oil pump 81. The oil control valve 84 changes the flow rate of the oil by opening and/or closing the control oil supply passage 54.

For example, in the present embodiment, the oil control valve 84 is a linear solenoid valve, and an opening amount thereof is changed according to an input duty ratio, that is, a drive duty ratio. In the present embodiment, the oil control valve 84 is configured such that the opening amount thereof is increased with an increase in the drive duty ratio. In this way, in a state where a sufficient amount of the oil is present in the control oil supply passage 54, the opening amount of the oil control valve 84 is increased with the increase in the drive duty ratio thereof. Accordingly, the hydraulic pressure in the pressure chamber 81m is increased, and the oil discharge amount of the oil pump 81 is reduced.

In the present embodiment, an oil filter 54a may be provided on an upstream side of the oil control valve 84 in the control oil supply passage 54, and the oil control valve 84 may be supplied with the oil that has been filtered by the oil filter 54a.

A mechanical relief valve 81z may be installed in the oil pump 81. For example, the oil pump 81 has a discharge passage 81h that extends from the discharge port 81k, and the relief valve 81z is provided in the discharge passage 81h. In the present embodiment, the relief valve 81z is a direct-acting relief valve. A first communication passage 51 is connected to a downstream end of the discharge passage 81h.

When a discharge hydraulic pressure that is the hydraulic pressure in the discharge passage 81h, that is, the pressure of the oil discharged from the oil pump 81 exceeds a predetermined upper limit pressure, the relief valve 81z discharges or partially discharges the oil in the discharge passage 81h to the oil pan 3. The oil that is discharged to the oil pan 3 may return to the oil pan 3 without being supplied to the oil supply passage 5 (the first communication passage 51). That is, when the discharge hydraulic pressure exceeds the upper limit pressure, the relief valve 81z partially discharges the oil discharged from the oil pump 81 to the outside of the oil supply passage 5.

The upper limit pressure may be set to a pressure that is lower than a minimum value of the discharge hydraulic pressure at the time when abnormal noise is generated from the oil pump 81. For example, when the discharge hydraulic pressure of the oil pump 81 is increased, the abnormal noise, that is, noise at a different frequency from that of normal driving noise that is generated in association with vibration of the vanes 81c, or the like even when the discharge hydraulic pressure is low. The upper limit pressure is set to a pressure that is lower than a lower limit value of the discharge hydraulic pressure at which this abnormal noise is generated.

In addition, the upper limit pressure may be set to a pressure that is higher than a minimum value of a discharge pressure at which a change speed of the opening and/or closing timing of the exhaust valve 14 becomes equal to or higher than a predetermined speed when, of the oil assumed as the engine oil, the oil with the highest viscosity at a low temperature is used for the exhaust S-VT 18 and the temperature of the oil is about 15 degrees Celsius below zero. In other words, the oil pump 81 is configured such that the upper limit pressure as described above is present.

For example, in the present embodiment, the upper limit pressure is set to a value that is the same or approximately the same as the lower limit value of the discharge hydraulic pressure at which the abnormal noise is generated, and that is smaller or slightly smaller than this lower limit value. Here, the lower limit value of the discharge hydraulic pressure, at which the abnormal noise is generated, varies depending on a size of the oil pump 81 and the like, and the upper limit pressure is set to about 600 kPa, for example.

Although not illustrated, in the present embodiment, the relief valve 81z may include: a plunger that opens/closes a communication portion between an intermediate portion of the discharge passage 81h and a return passage 81y connected to the oil pan 3; and a spring that presses the plunger in a direction to close the communication portion, and a spring constant of this spring is set to a value that corresponds to the upper limit pressure. Hereinafter, appropriately, a state of the relief valve 81z that partially discharges the oil to the outside of the oil supply passage 5 in conjunction with the discharge hydraulic pressure exceeding the upper limit pressure will be described that the relief valve 81z is opened, and a state of the relief valve 81z that does not discharge the oil to the outside of the oil supply passage will be described that the relief valve 81z is closed.

In the first communication passage 51, an oil filter 82 and an oil cooler 83 may be provided in this order from the upstream side (the oil pump 81 side). The oil that is discharged from the oil pump 81 (entirely or partially when the relief valve 81z is closed or opened, respectively) flows into the first communication passage 51, is filtered by the oil filter 82, is subjected to temperature adjustment by the oil cooler 83, and then flows into the main gallery 50.

### (Control System)

A controller 60 may control the engine 100. The controller 60 controls the oil supply apparatus 200, e.g., each section of the oil supply apparatus 200. For example, the controller 60 includes a processor and memory.

The controller 60 receives detection results of various sensors. The hydraulic pressure sensor 50a and the oil temperature sensor 50b are connected to the controller 60 For example, the hydraulic pressure sensor 50a, the oil temperature sensor 50b, a crank angle sensor 61 that detects a rotation angle of the crankshaft 26, an airflow sensor 62 that detects an air amount suctioned by the engine 100, a cam angle sensor 63 that detects rotational phases of the camshafts 43, 44, and a water temperature sensor 64 that detects a temperature of cooling water of the engine 100 are connected to the controller 60, which then receives the detection result of each of these sensors.

The controller 60 may calculate an engine speed on the basis of a detection signal from the crank angle sensor 61, calculates an engine load on the basis of a detection signal of the airflow sensor 62, and calculates actuation angles of the intake S-VT and the exhaust S-VT 18 on the basis of a detection signal of the cam angle sensor 63. The controller 60 corresponds to the "control section" in the invention.

The controller 60 may control the oil control valve 84. The controller 60 may also control the exhaust S-VT 18, that is, the direction switching valve 96 that actuates the exhaust S-VT 18.

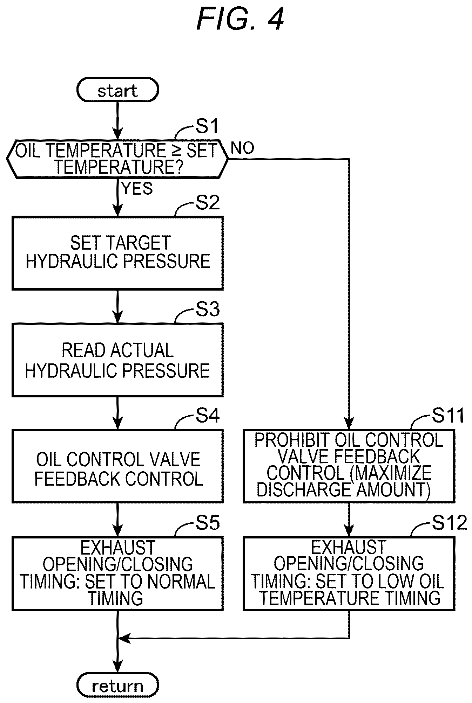

Next, a description will be made on contents of control for the oil control valve 84 and the direction switching valve 96 (the exhaust S-VT 18) that is executed by the controller 60 with reference to a flowchart in FIG. 4. Step S1 onward illustrated in FIG. 4 may be repeatedly executed at predetermined timing while the engine 100 is driven.

First, the controller 60 determines whether the temperature of the oil in the oil supply passage 5 is equal to or higher than a set temperature (step S1). The controller 60 makes this determination by using the temperature detected by the oil temperature sensor 50b. Hereinafter, the temperature of the oil detected by the oil temperature sensor 50b will be referred to as the oil temperature in the oil supply passage. The set temperature is set in advance and stored in the controller 60. The set temperature is set to 0°C, for example.

If it is determined YES in step S1, and the oil temperature in the oil supply passage is equal to or higher than the set temperature, the controller 60 sets a target hydraulic pressure that is a target value of the hydraulic pressure in the oil supply passage 5 (step S2). Here, a target value of the hydraulic pressure in the main gallery 50 is set as the target hydraulic pressure. Hereinafter, the hydraulic pressure in the main gallery 50 may be referred to as the hydraulic pressure in the oil supply passage.

In the present embodiment, the controller 60 may set a target value of each of the actuation devices, which are actuated by the hydraulic pressure generated in the oil supply passage 5, on the basis of an operation state of the engine, for example, the engine speed, the engine load, and the like, and sets the highest target value as the target hydraulic pressure. The actuation devices described above may include one or more of the direction switching valve 96, the exhaust S-VT 18 and the oil jet 71, or at least include the direction switching valve 96, the exhaust S-VT 18, and the oil jet 71. In step S2, the target hydraulic pressure may be set to a lower value than the upper limit hydraulic pressure described above.

Next, the controller 60 reads an actual hydraulic pressure, which is the current hydraulic pressure in the oil supply passage (step S3). For example, the controller 60 reads the pressure detected by the hydraulic pressure sensor 50a as the actual hydraulic pressure.

Next, the controller 60 executes the feedback control of the oil control valve 84 to obtain the target hydraulic pressure set in step S2 (step S3). The controller 60 may execute the feedback control of the drive duty ratio of the oil control valve 84 on the basis of a deviation between the actual hydraulic pressure and the target hydraulic pressure in order to make the actual hydraulic pressure become the target hydraulic pressure.

For example, the controller 60 executes PID control of the drive duty ratio of the oil control valve 84. In this way, when the oil temperature in the oil supply passage is equal to or higher than the set temperature, the hydraulic pressure in the oil supply passage is controlled to the target hydraulic pressure.

In addition, when the oil temperature in the oil supply passage is equal to or higher than the set temperature, the controller 60 may control the exhaust S-VT 18 such that the exhaust opening and/or closing timing becomes normal timing set for the high oil temperature (step S5), and then terminates the processing (the processing returns to step S1). For example, the controller 60 sets the normal timing from the engine speed, the engine load, and the like, and actuates the direction switching valve 96 to achieve this.

On the other hand, if it is determined NO in step S1, and the oil temperature in the oil supply passage is lower than the set temperature, the controller 60 prohibits the feedback control of the oil control valve 84. That is, the controller 60 does not execute the feedback control of the oil control valve 84, and controls the oil control valve 84 to make the oil discharge amount of the oil pump 81 become a maximum amount (step S11).

For example, in the present embodiment, the controller 60 sets the drive duty ratio of the oil control valve 84 to 0%, and thereby maximizes the oil discharge amount. However, in step S11, the oil discharge amount may not be strictly maximum, and may be controlled to an amount close to the maximum. That is, in the present embodiment, the drive duty ratio of the oil control valve 84 may be controlled to a value close to 0% instead of strictly 0%.

Just as described, when the oil temperature in the oil supply passage is lower than the set temperature, the oil discharge amount of the oil pump 81 is set to the maximum amount. However, as described above, the relief valve 81z is provided in the discharge passage 81h, and the relief valve 81z is configured to be opened when the discharge hydraulic pressure of the oil pump 81 exceeds the upper limit pressure. Thus, even when the oil discharge amount of the oil pump 81 is maximized, the discharge hydraulic pressure and thus the hydraulic pressure in the oil supply passage may not exceed the upper limit pressure. When the oil temperature in the oil supply passage is lower than the set temperature, the discharge hydraulic pressure and the hydraulic pressure in the oil supply passage are each set to the maximum pressure that can be obtained within a range lower than the upper limit pressure.

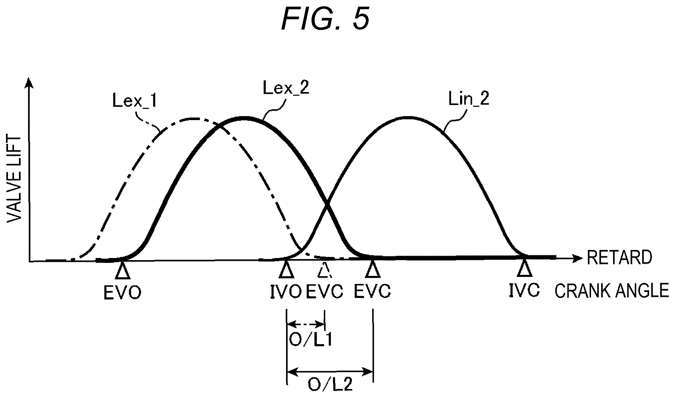

When the oil temperature in the oil supply passage is lower than the set temperature, the controller 60 may control the exhaust S-VT 18 such that the exhaust opening and/or closing timing becomes low oil temperature timing set for the low oil temperature (step S12). FIG. 5 is a view illustrating the valve lift of the intake valve 13 and the exhaust valve 14.

In FIG. 5, a solid line represents an example of the valve lift at the time when the exhaust opening and/or closing timing is the low oil temperature timing, and a chain line represents an example of the valve lift at the time when the exhaust opening and/or closing timing is the normal timing. As indicated by the solid line in FIG. 5, the low oil temperature timing is set to timing at which a valve overlap occurs in which both the intake valve 13 (Lin) and the exhaust valve 14 (Lex_2) are opened.

In addition, the low oil temperature timing (Lex_2) is set to the timing on the retard side of the normal timing (Lex_1) and is set such that a valve overlap period (O/L2, a period in which both the intake and exhaust valves 13, 14 are opened) in which the oil temperature in the oil supply passage is lower than the set temperature becomes longer than a valve overlap period (O/L1) in which the oil temperature in the oil supply passage is equal to or higher than the set temperature. For example, under the same engine speed and the same engine load, the low oil temperature timing (Lex_2) is set as the timing on the retard side of the normal timing (Lex_1).

After step S12, the controller 60 terminates the processing (the processing returns to step S1).

### (Operational Effects, Etc.)

As it has been described so far, in the oil supply apparatus 200 according to the above embodiment, when the oil temperature in the oil supply passage, that is, the temperature of the oil in the main gallery 50 is equal to or higher than the set temperature, the oil control valve 84 is subject to the feedback control such that the hydraulic pressure in the oil supply passage, that is, the hydraulic pressure in the main gallery 50 becomes the target hydraulic pressure. Accordingly, the hydraulic pressure in the main gallery 50 and thus the oil supply passage 5 can be set to the target hydraulic pressure, and the appropriate hydraulic pressure can be applied to the direction switching valve 96, the exhaust S-VT 18, and the oil jet 71 according to the operation state of the engine 100.

Meanwhile, when the oil temperature in the oil supply passage is lower than the set temperature like at the cold start of the engine 100, the feedback control is not executed, and the oil control valve 84 is controlled to maximize the discharge amount of the oil pump 81. In this way, it is possible to stabilize and promptly increase the hydraulic pressure in the oil supply passage 5.

For example, when the temperature of the oil is low, viscosity thereof is high, and responsiveness thereof is low. Accordingly, even when the drive duty ratio of the oil control valve 84 is changed, the hydraulic pressure in the main gallery 50 is not changed promptly. Accordingly, in the case where the drive duty ratio of the oil control valve 84 is subject to the feedback control on the basis of the hydraulic pressure in the main gallery 50 at this time, hunting of the drive duty and the hydraulic pressure is significantly increased.

For example, at the start of the engine 100, the control oil supply passage 54 is not filled with the sufficient oil. Thus, when the viscosity of the oil is high, an inflow amount of the oil into the pressure chamber 81m of the oil pump 81 is not changed promptly even when the drive duty ratio of the oil control valve 84 is changed in association with a delay in the inflow of the oil into the control oil supply passage 54. Accordingly, when the drive duty ratio of the oil control valve 84 is subject to the PID control in such a state, the hydraulic pressure in the main gallery 50 and the target hydraulic pressure diverge over a relatively long period, and thus an I term continues to be integrated. As a result, when the control oil supply passage 54 is filled with the sufficient oil, the drive duty ratio of the oil control valve 84 significantly deviates from an appropriate value, and significant hunting of the hydraulic pressure occurs due to this as a base point.

To handle the above, in the above embodiment, the feedback control of the oil control valve 84 is not executed when the oil temperature in the oil supply passage is low and the viscosity of the oil is high. Thus, hunting of the hydraulic pressure as described above can be suppressed. Furthermore, since the oil control valve 84 is controlled to maximize the oil discharge amount of the oil pump 81, the hydraulic pressure in the oil supply passage 5 can be increased promptly.

However, when the oil discharge amount of the oil pump 81 is simply maximized, there is a possibility that the discharge hydraulic pressure of the oil pump 81 becomes excessively high and the abnormal noise is generated from the oil pump 81.

To handle the above, in the above embodiment, since the mechanical relief valve 81z is provided in the oil pump 81, it is possible to avoid the discharge hydraulic pressure from exceeding the upper limit hydraulic pressure while maximizing the oil discharge amount of the oil pump 81. Therefore, it is possible to prevent the abnormal noise from being generated from the oil pump 81.

Here, as a countermeasure against the abnormal noise, it is considered to design the oil pump 81 such that the discharge hydraulic pressure at the time when the oil discharge amount becomes maximum falls within a range where no abnormal noise occurs, that is, becomes lower than the upper limit hydraulic pressure described above. However, the discharge hydraulic pressure varies depending on the viscosity of the oil. The viscosity of the oil varies depending on the temperature of the oil and the type of the oil. Accordingly, even when the oil pump 81 is designed for a certain type of the engine oil as described above, depending on the type and the temperature of the oil to be used, the discharge hydraulic pressure at the time of maximizing the discharge amount of the oil pump 81 possibly exceeds the upper limit hydraulic pressure, and the abnormal noise is possibly generated. To handle the above, according to the above embodiment, it is possible to reliably set the discharge hydraulic pressure to be lower than the upper limit hydraulic pressure and to reliably prevent the generation of the abnormal noise.

In the above embodiment, when the oil temperature in the oil supply passage is lower than the set temperature, the valve overlap period may be extended by controlling the exhaust opening and/or closing timing to the low oil temperature timing set on the retard side. Accordingly, when the oil temperature in the oil supply passage is low, that is, when the temperature of the engine 100 is low, the temperature in the combustion chamber 27 can be increased by increasing an amount of the high-temperature burned gas that remains in the combustion chamber 27 can be increased, and thus combustion of air-fuel mixture of the fuel and the air can be promoted. Accordingly, exhaust performance of the engine 100 can be improved by suppressing discharge of the unburned fuel.

In addition, when the oil temperature in the oil supply passage is high, that is, when the temperature of the engine 100 is high, the valve overlap period is shortened by controlling the exhaust opening and/or closing timing to the normal timing. Thus, it is possible to prevent the temperature in the combustion chamber 27 from becoming excessively high.

Here, in order to obtain the above-described effects, it is necessary to control the exhaust opening and/or closing timing to the appropriate timing (the low oil temperature timing and the normal timing) by the exhaust S-VT 18. To handle the above, in the above embodiment, when the oil temperature in the oil supply passage is lower than the set temperature, the high hydraulic pressure can stably be supplied to the exhaust S-VT 18 immediately after the start of the engine 100.

When the oil temperature in the oil supply passage is equal to or higher than the set temperature, the hydraulic pressure supplied to the exhaust S-VT 18 can be controlled to the target hydraulic pressure from time immediately after the start of the engine 100. Thus, it is possible to reliably exert the above effects by securing the responsiveness of the exhaust S-VT 18.

### (Modified Examples)

In the above embodiment, the description has been made on the case where the relief valve 81z is installed in the oil pump 81. However, the relief valve 81z may be provided in the oil supply passage 5 on the downstream side of the oil pump 81 in an oil flow direction.

In the above embodiment, the description has been made on the case where the oil temperature sensor 50b is provided in the third communication passage 53, and the oil control valve 84 and the direction switching valve 96 (the exhaust S-VT 18) are controlled on the basis of the detected value by the oil temperature sensor 50b. However, the installation position of the oil temperature sensor 50b is not limited thereto. The oil temperature sensor 50b may be omitted, the oil temperature in the oil supply passage 5 may be estimated on the basis of the temperature of the cooling water flowing through the engine 100, or the like, and the above control may be executed on the basis of the estimated value. Instead of the oil temperature in the oil supply passage 5, the temperature of the cooling water flowing through the engine 100 may be used, and the above control may be executed on the basis of the temperature of the cooling water.

In the above embodiment, the description has been made on the case where the hydraulic pressure sensor 50a is provided in the main gallery 50 and the oil control valve 84 is controlled on the basis of the detected value by this oil pressure sensor 50a. However, the installation position of the hydraulic pressure sensor 50a is not limited thereto.

The oil pump 81 only needs to be the variable capacity pump, and a specific structure thereof is not limited to the above. The specific setting index of the upper limit pressure is not limited to the above.

### [Reference Signs List]

5: oil supply passage
18: exhaust-side S-VT (exhaust closing timing change device, actuation device)
50a: hydraulic pressure sensor (hydraulic pressure detection section)
50b: oil temperature sensor (temperature detection section)
60: controller (control section)
81: oil pump
81m: pressure chamber
81z: relief valve
84: oil control valve
100: engine
200: oil supply apparatus

## Claims

1. An oil supply apparatus (200) that is configured to be provided to an engine (100) and configured to supply oil to a hydraulic actuation device (18), the oil supply apparatus (200) comprising:
a variable capacity oil pump (81);
an oil supply passage (5) that is configured to connect the oil pump (81) and the actuation device (18) to supply the oil to the actuation device (18);
a hydraulic pressure detection section (50a) that is configured to detect a hydraulic pressure in the oil supply passage (5);
a temperature detection section (50b) that is configured to detect a temperature of the engine (100);
an oil control valve (84) that is configured to change an oil discharge amount as an amount of the oil discharged from the oil pump (81) by adjusting a flow rate of the oil supplied to a pressure chamber (81m) of the oil pump (81); and
a control section (60) that is configured to control the oil control valve (84), wherein
the control section (60) is configured to:
set a target hydraulic pressure as a target value of the hydraulic pressure in the oil supply passage (5) according to an operation state of the engine (100) and execute feedback control of the oil control valve (84) such that the hydraulic pressure detected by the hydraulic pressure detection section (50a) matches the target hydraulic pressure when the temperature detected by the temperature detection section (50b) is equal to or higher than a predetermined set temperature; and
prohibit the feedback control and control the oil control valve (84) such that the oil discharge amount becomes a maximum amount when the temperature detected by the temperature detection section (50b) is lower than the set temperature.

2. The oil supply apparatus (200) according to claim 1, further comprising
a mechanical relief valve (81z) that is configured to discharge or partially discharge the oil to outside of the oil supply passage (5) when a discharge hydraulic pressure as a pressure of the oil discharged from the oil pump (81) exceeds an upper limit pressure.

3. The oil supply apparatus (200) according to claim 2, wherein
the upper limit pressure is lower than a minimum value of the discharge hydraulic pressure when abnormal noise is generated from the oil pump (81).

4. The oil supply apparatus (200) according to any one of the preceding claims, wherein
the actuation device (18) includes a hydraulic exhaust closing timing change device that is configured to change a valve closing timing of an exhaust valve (14) provided to the engine (100).

5. The oil supply apparatus (200) according to claim 4, wherein
when the temperature detected by the temperature detection section (50b) is lower than the set temperature, the control section (60) is configured to control the exhaust closing timing change device to delay or retard the valve closing timing of the exhaust valve (14).

6. The oil supply apparatus (200) according to claim 4 or 5, wherein
when the temperature detected by the temperature detection section (50b) is lower than the set temperature, the control section (60) is configured to control the exhaust closing timing change device to delay or retard the valve closing timing of the exhaust valve (14) from a valve closing timing of the exhaust valve (14) when the temperature is equal to or higher than the set temperature.

7. The oil supply apparatus (200) according to claim 5 or 6, wherein
when the temperature detected by the temperature detection section (50b) is lower than the set temperature, the control section (60) is configured to control the exhaust closing timing change device to extend an overlap period in which valve opening periods of an intake valve and the exhaust valve overlap.

8. The oil supply apparatus (200) according to any one of the preceding claims, wherein
the oil control valve (84) is a solenoid valve and configured to change the flow rate of the oil according to a drive duty ratio.

9. The oil supply apparatus (200) according to claim 8, wherein
the control section (60) is configured to control the drive duty ratio to be 0% or substantially 0% when the temperature detected by the temperature detection section (50b) is lower than the set temperature.

10. The oil supply apparatus (200) according to any one of the preceding claims, wherein
the operation state of the engine (100) is an engine speed and/or an engine load.

11. An engine (100) comprising:
the oil supply apparatus (200) according to any one of the preceding claims; and
a hydraulic actuation device (18) to which the oil supply apparatus (200) supplies oil.

12. A method of supplying oil to a hydraulic actuation device (18) of an engine (100),
wherein an oil supply passage (5) connects an oil pump (81) and the actuation device (18) to supply the oil to the actuation device (18), the method comprising:
detecting a hydraulic pressure in the oil supply passage (5); and
detecting a temperature of the engine (100),
wherein an oil control valve (84) changes an oil discharge amount as an amount of the oil discharged from the oil pump (81) by adjusting a flow rate of the oil supplied to a pressure chamber (81m) of the oil pump (81),
the method further comprising:
setting a target hydraulic pressure of the hydraulic pressure in the oil supply passage (5) according to an operation state of the engine (100) and executing feedback control of the oil control valve (84) such that the hydraulic pressure matches the target hydraulic pressure when the temperature is equal to or higher than a predetermined set temperature; and
prohibiting the feedback control and controlling the oil control valve (84) such that the oil discharge amount becomes a maximum amount when the temperature is lower than the set temperature.

13. The method according to claim 12, wherein
a mechanical relief valve (81z) discharges or partially discharges the oil to outside of the oil supply passage (5) when a discharge hydraulic pressure as a pressure of the oil discharged from the oil pump (81) exceeds an upper limit pressure.

14. The method according to claim 13, wherein
the upper limit pressure is lower than a minimum value of the discharge hydraulic pressure when abnormal noise is generated from the oil pump (81).

15. The method according to any one of claims 12 to 14, wherein
the actuation device (18) includes a hydraulic exhaust closing timing change device that changes valve closing timing of an exhaust valve (14) provided to the engine (100), and
the method further comprises, when the temperature is lower than the set temperature, delaying or retarding the valve closing timing of the exhaust valve (14), and optionally
when the temperature is lower than the set temperature, the valve closing timing of the exhaust valve (14) is delayed or retarded from a valve closing timing when the temperature is equal to or higher than the set temperature.
